# EUROPÄISCHE PATENTSCHRIFT

(11) **EP 0 767 083 B1**
(45) Veröffentlichungstag und Bekanntmachung des Hinweises auf die Patenterteilung: **29.12.1999**
(21) Anmeldenummer: 96112073.0
(22) Anmeldetag: 26.07.1996
(51) Int. Cl.: B60J 7/00

(54) **Dachhimmel für Fahrzeuge**
Roof head-liner for vehicle
Habillage de toit pour véhicules

(30) Priorität: 05.10.1995 DE 19537081
(43) Veröffentlichungstag der Anmeldung: 09.04.1997
(73) Patentinhaber: Johnson Controls Interiors GmbH, 42285 Wuppertal (DE)
(72) Erfinder: Viertel, Lothar, 66802 Altforweiler (DE); Welter, Patrick, 57730 La Chambre (FR)
(74) Vertreter: Zapf, Christoph, Dipl.-Ing.

(56) Entgegenhaltungen:
- WO-A-90/00986
- FR-A- 1 124 226
- GB-A- 2 202 806

## Beschreibung

Die Erfindung bezieht sich auf einen Dachhimmel für Fahrzeuge mit einem sich in Fahrzeuglängs- und Querrichtung erstreckenden Himmelstoff, wie beispielsweise aus der FR-A-1 124 226 bekannt. Ein solcher Dachhimmel entspricht dem Oberbegriff des Patentanspruchs 1.

Der Erfindung liegt die Aufgabe zugrunde, einen durch den vorgenannten Stand der Technik bekanntgewordenen Dachhimmel so auszubilden, daß eine einfache Herstellung und Montage und insbesondere auch erreicht wird, daß der Himmelstoff sowohl im auseinandergezogenen als auch im zusammengefalteten Zustand keine nach unten durchhängende die Kopffreiheit einschränkende Falten aufweist.

Der Dachhimmel für Fahrzeuge ist zur Lösung dieser Aufgabe erfindungsgemäß dadurch gekennzeichnet, daß die Führungselemente als jeweils den ersten und zweiten, den dritten und vierten, den fünften und sechsten und, sofern vorhanden, den siebten und achten Spriegel in ihrer beabstandeten Anordnung starr miteinander verbindende Schlitten ausgebildet sind, daß für jeden Schlitten separate Führungsmittel vorgesehen sind, die aus Schienen bestehen, welche in paralleler Ausrichtung übereinander angeordnet sind und daß der Himmelstoff durch die Spriegel in gespannte Felder und ungespannte Felder unterteilt ist, die wahlweise nebeneinander- oder übereinanderliegend anordbar sind, um das Fahrzeugdach weitgehend abzudecken bzw. freizugeben.

Durch die erfindungsgemäßen Maßnahmen wird erreicht, daß der Himmelstoff sowohl im auseinandergezogenen als auch im zusammengefalteten Zustand keine nach unten durchhängende Falten mehr aufweisen kann mit dem Vorteil einer größtmöglichen Kopffreiheit. Der Himmelstoff bzw. die zwischen den einzelnen Spriegeln liegenden Bereiche desselben erstrecken sich vielmehr parallel zum Fahrzeugdach, dem sie zudem relativ eng benachbart sein können. Lediglich beim Zusammenfalten des Schiebefalthimmels kommt es vorübergehend zu einem gewissen Durchhängen der Himmelstoffbereiche, die zwischen dem zweiten und dritten oder dem vierten und fünften Spriegel liegen. Die erfindungsgemäße Maßnahme, den Himmelstoff durch die Spriegel in gespannte Felder und ungespannte Felder zu unterteilen, die wahlweise nebeneinander- oder übereinanderliegend anordbar sind, um das Fahrzeugdach weitgehend abzudecken bzw. freizugeben, erlaubt auch ein z. B. halbes Öffnen des Schiebefalthimmels ohne durchhängende Falten.

Eine Ausgestaltung der Erfindung sieht vor, daß der in Fahrzeuglängsrichtung hinterste Schlitten ortsfest angeordnet ist und daß den verschiebbaren Schlitten jeweils eine ihrem Verschiebeweg entsprechend lange Schiene zugeordnet ist. Das Öffnen und Schließen des Schiebefalthimmels kann damit nur, wie auch von der Käuferschaft erwünscht, von den vorderen Fahrzeugsitzen aus vorgenommen werden. Die Abstufung der Schienenlänge fördert das gute Aussehen und hilft zudem Material einzusparen.

Mit Rücksicht auf die angestrebte Kopffreiheit ist weiterhin vorgesehen, daß die Spriegel eine der Querwölbung des Fahrzeugdachs angepaßte bogenförmige Ausbildung aufweisen. Auch sind die Spriegel im Querschnitt unrund, wie oval und damit in einfacher Weise gegen ein Verdrehen in ihrer entsprechend unrunden Schlittenaufnahme geschützt.

Um das Durchhängen der ungespannten Himmelstoffelder während der Schließbewegung zu minimieren, ist vorgesehen, daß die Ränder der ungespannten Felder den jeweils angrenzenden Spriegel von ober her umgreifen.

Ebenso wie die Spriegel der Querwölbung des Fahrzeugdachs angepaßt sind, sind auch die Schienen der Längswölbung des Fahrzeugdachs angepaßt.

Die Schlaufen zur Aufnahme der Spriegel können separat hergestellt und am Himmelstoff angenäht oder angeschweißt sein. Bevorzugt sind aber die Schlaufen durch Schweiß- oder Nähnähte mit dem Himmelstoff einstückig ausgebildet.

Zwecks Erzielung einer leichtgängigen Bedienbarkeit des Schiebefalthimmels können die Schlitten mit in den Schienen geführten Gleitflächen und/oder Rollen ausgebildet sein. Dabei ist es von Vorteil, wenn gemäß einer Weiterbildung der Erfindung die Schlitten jeweils eine die Gleitflächen und/oder Rollen in Anlage an die Schienen bringbare Verstelleinrichtung aufweisen, um damit Toleranzen ausgleichen zu können. Die Verstelleinrichtung kann ein Federmittel oder auch eine Exzenterscheibe aufweisen.

Um das gute Aussehen des Dachhimmels zu fördern empfiehlt es sich, die Schienen an einem an der Fahrzeugkarosserie befestigbaren Verkleidungslement anzuordnen. Es ist auch vorteilhaft, die Schienen einstückig und materialeinheitlich mit einem an der Fahrzeugkarosserie befestigbaren Verkleidungselement auszubilden, wobei das Verkleidungselement zweckmäßigerweise aus einem Kunststoff-Spritzgußteil besteht.

Zum Öffnen und Schließen des Schiebefalthimmels empfiehlt sich die Anordnung einer Betätigungshandhabe am vordersten Spriegel.

Ein Ausführungsbeispiel der Erfindung wird nachfolgend anhand der Zeichnungen näher erläutert, und es zeigen:
- Fig. 1: eine Explosivdarstellung des Himmelstoffs mit abgenähten oder abgeschweißten Schlaufen für die Spriegel,
- Fig. 2: eine vergrößerte Darstellung des eingekreisten Bereichs X in Fig. 3,
- Fig. 3: einen Schnitt, etwa folgend der Linie A-A in Fig. 1,
- Fig. 4: eine Explosivdarstellung des Himmelstoffs mit montierten Spriegeln nebst daran anzuordnender Führungselemente,
- Fig. 5: den Dachhimmel nach Fig. 4 im montierten Zustand,
- Fig. 6: den Dachhimmel im aufgefalteten Zustand, etwa folgend der Linie B-B in Fig. 8,
- Fig. 7: den Dachhimmel nach Fig. 6 im zusammengefalteten Zustand,
- Fig. 8: eine Explosivdarstellung des Dachhimmels mit Führungsmitteln,
- Fig. 9: einen Schnitt, etwa folgend der Linie F-F in Fig. 6,
- Fig. 10, 10a und 11: Befestigungsanordnungen von Führungsmittel aufweisenden Verkleidungselementen,
- Fig. 12: ein als Schlitten ausgebildetes Führungselement,
- Fig. 13: eine weitere Befestigungsanordnung eines Verkleidungselements,
- Fig. 14: einen Schnitt C-C nach Fig. 12,
- Fig. 15: einen Schnitt D-D nach Fig. 12 und
- Fig. 16: einen Schnitt E-E nach Fig. 15.

Der neue Dachhimmel bzw. Schiebefalthimmel 1 umfaßt im wesentlichen einen Himmelstoff 2 als Bespannung, mehrere Spriegel 5, Führungselemente in Form von an den Spriegelenden angebrachten Schlitten 12 und 15, als Schienen 13 ausgebildete Führungsmittel und an der Karosserie 29 zu befestigende Verkleidungselemente 30.

Der Himmelstoff 2 kann aus einem perforierten Polyestergewirke, einem textilen Flächengebilde, einer Folie einem Segeltuchmaterial od. dgl. bestehen und hinsichtlich der Lichtdurchlässigkeit und der farblichen Gestaltung den Kundenwünschen entsprechen.

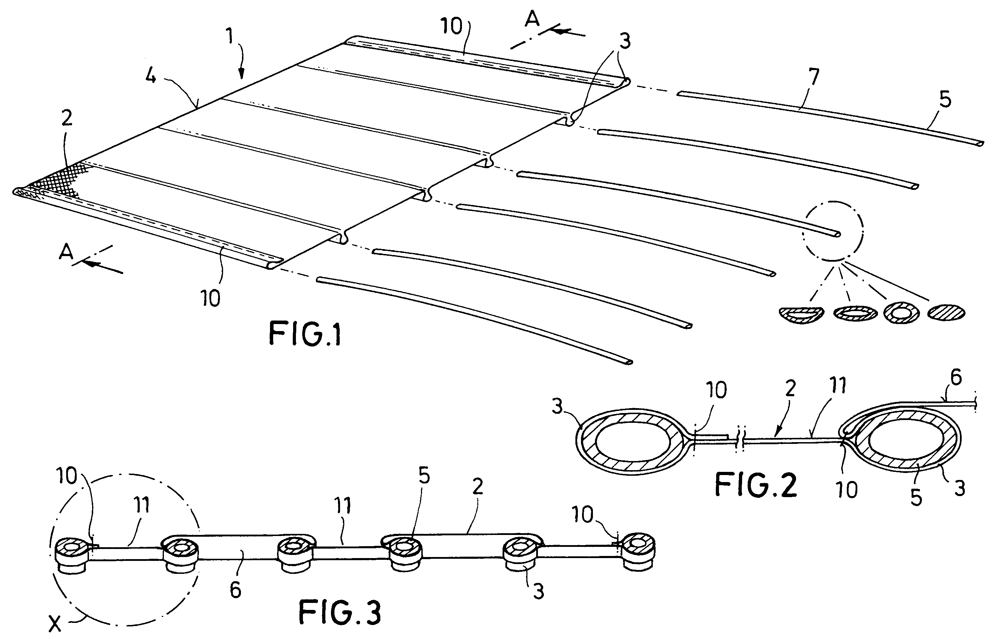

Der Himmelstoff 2 nach Fig. 1 erhält eine erste Formgebung durch einen entsprechenden Zuschnitt, der dann seine weitere Gestaltung durch Nähen oder Schweißen, je nach Materialwahl, erfährt. Im Ausführungsbeispiel sind sechs Schlaufen 3 durch Nähte 10 gebildet, die in Querrichtung entsprechend Fig. 1 verlaufen. Ebenso können die beiden Außenkanten 4 in Längsrichtung des Himmelstoffs 2 abgeschweißt oder abgenäht sein.

Die formgebenden Spriegel 5 sind aus Funktions- und Festigkeitsgründen vorzugsweise aus Aluminium-Strangpreßprofilen hergestellt, vorzugsweise in ovaler Form. Die Spriegel 5 können aber auch aus geeigneten Kunststoffmaterialien gespritzt werden. Die Spriegel 5 sind in Form und Maß identisch und in der Länge entsprechend der vorgegebenen Dachwölbung 8, z.B. ein Glasdach 9, mit einem Radius 7 versehen. Die Oberflächen der Spriegel 5 können eloxiert oder pulverbeschichtet sein, um, falls gewünscht, eine Farbabstimmung mit den übrigen Interieurteilen zu erreichen. Die Spriegel 5 werden in die Schlaufen 3 eingeschoben. Sie ragen an der Außenkante 4 des Himmelstoffs 2 gleichmäßig weit hervor, wobei die Nähte 10, wie in Fig. 2 und 3 gezeigt, zu den einzelnen Spriegeln 5 positioniert werden, womit sich maßlich gleiche Felder 11 des Himmelstoffs 2 zwischen den einzelnen Spriegeln 5 ergeben.

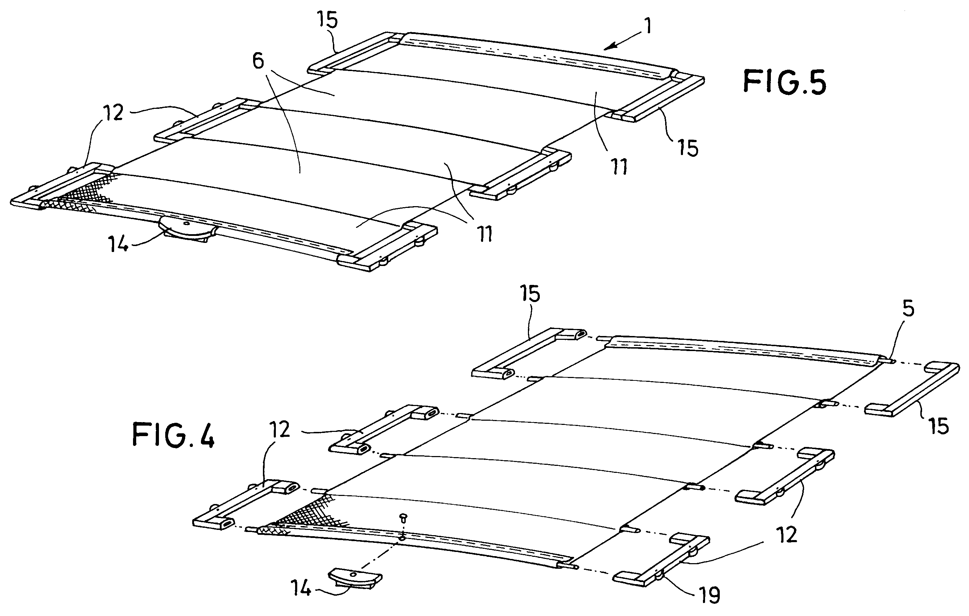

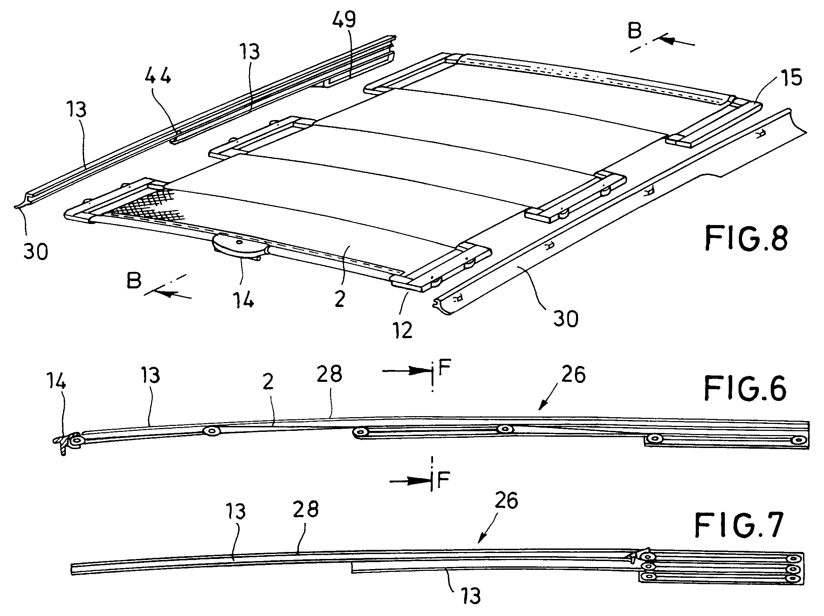

Um den Ablauf des Schiebefalthimmels 1 bei der Betätigung zu gewährleisten, ist es nötig, die Nähte 10 wie in Fig. 2 und 3 gezeigt anzuordnen in der Kombination mit der stufenweisen Anordnung der Schienen 13, entsprechend Fig. 6 und 7, sowie der Schlitten 12. Dadurch wird nun ein abgestimmter faltenfreier Raffeffekt beim Öffnen erzielt. Das gleiche gilt für den Schließvorgang entsprechend Fig. 6. An den montierten Spriegeln 5 werden endseitig die Schlitten 12 aufgesteckt. Es werden jeweils zwei Spriegel 5 durch einen Schlitten 12 miteinander verbunden, so daß der Himmelstoff 2 in gespannte Felder 11 und ungespannte Felder 6 unterteilt wird. Der letzte Schlitten 15 entsprechend Fig. 4 und 5 dient nur zur Rahmenbildung wie vorerwähnt und Fixierung des Schiebefalthimmels 1 da dieser nicht bewegt wird.

Zur Öffnungs- und Schließbetätigung des Schiebefalthimmels 1 ist am vorderen Spriegel 5 ein Betätigungsgriff als Betätigungshandhabe 14 aufgesteckt und zur Sicherung verschraubt.

Die Schlitten 12, 15 sind Kunststoffspritzlinge. Die Schlitten 12, 15 haben je zwei Hohlkammern 16 angepaßt an die Spriegel 5. Die Schlitten 12 haben seitliche Gleitflächen 17 die den Führungsschienen 13 angepaßt sind. Im unteren längsseitigen Sichtbereich des Schlittens 12 ist zur zusätzlichen Lichtabschottung eine dünne Wandung 18 angebildet, die zudem zur Auflage der Außenkante 4 des Himmelstoffs 2 dienen kann.

Um eine reibungsfreiere Betätigung (besseres gleiten) des Schiebefalthimmels 1 zu erreichen, haben die Schlitten 12 je zwei Rollen 19 mit einem Lagerzapfen 20, die in einer Nut 21 des Schlittens 12 mittig gelagert sind. Um Karosseriequertoleranzen auszugleichen ist vorgesehen, daß die Rollen 19 über spiralförmige Kunststoffscheiben (Exzenterscheiben 24) justiert werden können. Die Einstellung geschieht über ein Schlitzloch 22, welches durch das Loch 23 im Schlitten 12 mittels z. B. eines Schraubenziehers bewirkt werden kann. Die Kunststoffscheibe 24 ist drehbar gelagert in einer taschenartigen Ausnehmung 25 des Schlittens 12. Um ein ungewolltes Verstellen zu verhindern hat die spiralförmige Scheibe 24 auf dem Umfang gleichmäßig verteilt Rastungen 41 die an der vorgesehenen Erhöhung 42 in der taschenartigen Ausnehmung 25 einrasten. Die Justierungsmöglichkeit ist so festgelegt bzw. ausgelegt, daß eine problemlose Handhabung im eingebauten Zustand des Schiebefalthimmels 1 möglich ist.

Durch die Gesamtkombination der gebogenen Spriegel 5 und der stufenweisen Anordnung der seitlichen Schienen 13 mit deren parallel gebildeten Radiusanbringung 28 wird die Forderung der Längs- und Querwölbung für den Schiebefalthimmel 1 ebenso erfüllt, wie eine geforderte Kopffreiheit 27 zum Schiebefalthimmel 1.

Für eine Zwischenstellung öffnen/schließen ist es angebracht, daß an den oberen Schienen 13 eine Markierung 44 als Anschlag für eine Rastposition vorgesehen wird, um ein Durchhängen des Himmelstoffs 2 in undefinierter Zwischenstellung zu vermeiden.

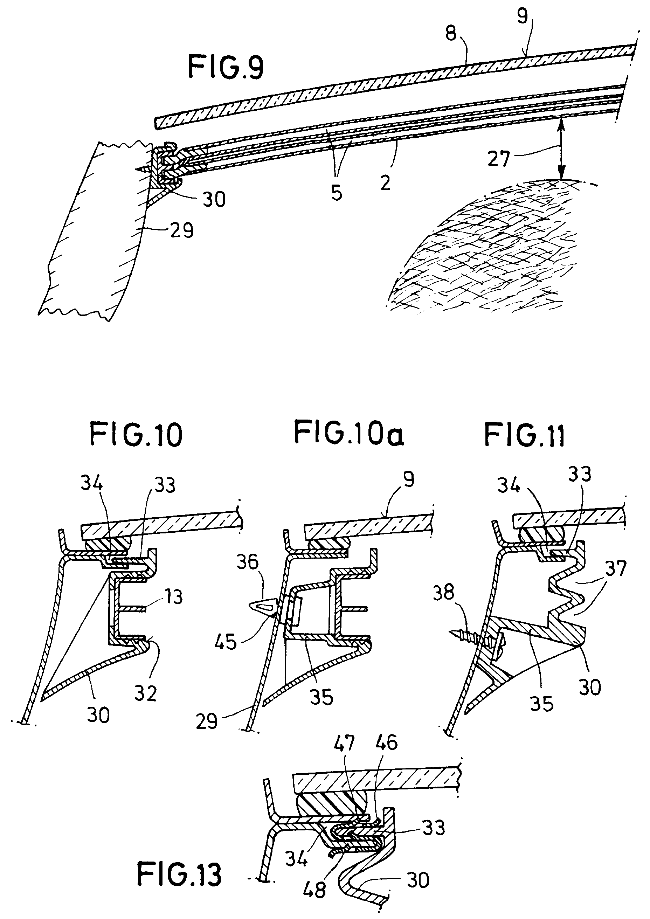

Die seitlichen Verkleidungselemente 30 sind aus Kunststoff gespritzt. Entsprechend Fig. 10, 10a ist vorgesehen, daß das Verkleidungselement 30 eine U-förmige Ausnehmung 32 aufweist, in die die abgestuften Schienen 13 z.B. eingepreßt/geklipst/umspritzt werden.

Zwecks Montage und Positionierungserleichterung haben die Verkleidungselemente 30 im oberen Bereich lokal angespritzte Zungen 33, die in die karosserieseitig angeformten Blechtaschen 34 eingeführt werden. Zur Befestigung der kompletten Verkleidungselemente 30 inklusiv der Schienen 13 sind an den Verkleidungselementen 30 örtlich topfartige Erhebungen 35 integriert, die dazu dienen, bekannte Klipse 36 aufzunehmen, die in entsprechende Aufnahmelöcher 45 im Innenblech der Karosserie 29 eingedrückt werden. Die Erhebungen 35 dienen auch dazu, die Verkleidungselemente 30 auf eine erforderliche Distanz zur Karosserie 29 zu bringen.

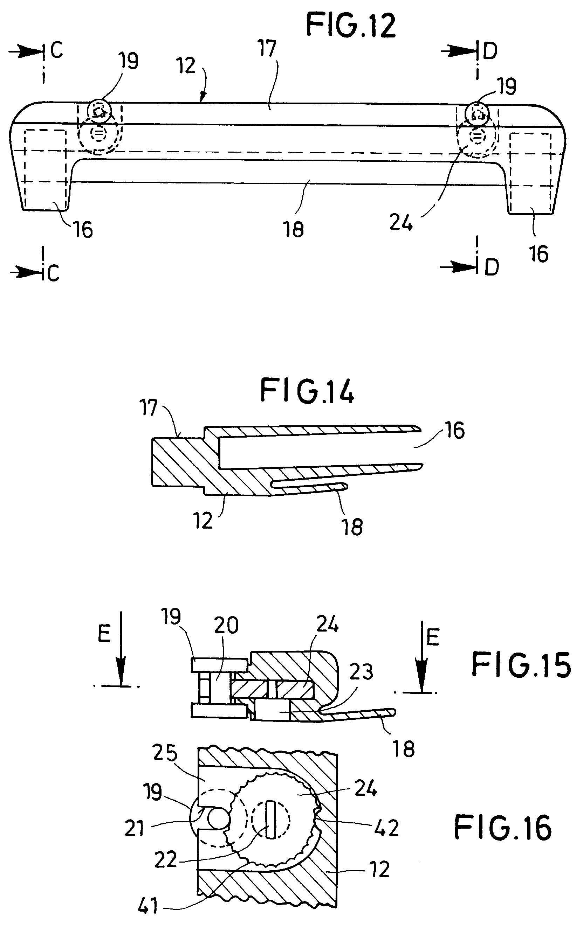

Alternativ zu Fig. 10, 10a kann gemäß Fig. 11 vorgesehen sein, die Verkleidungselemente 30 und die Führungsnuten 37 für die Schlitten 12 aus einem gespritzten Kunststoffteil zu erstellen. Die Vormontage dieses Teils ist wie vorgenannt in Fig. 10, jedoch ist anstelle der Klipsverbindung 36 eine Schraube 38 vorgesehen.

Fig. 13 stellt u.a. eine andere Lösungsmöglichkeit für die Befestigung der Verkleidungselemente 30 dar. Hier wird auf die Kunststoffzungen 33 eine Blechkralle 46 aufgedrückt, wobei sich die ausgestellten Krallen 47 verhaken. Danach wird das bestückte Verkleidungselement 30 mittels der Blechkralle 46 in die Blechtasche 34 eingedrückt, wobei sich die dafür vorgesehenen weiteren ausgestellten Krallen 48 am Karosserieblech verkrallen. Die Montage des kompletten Schiebefalthimmels 1 wird so durchgeführt, daß zunächst die seitlichen kompletten Verkleidungselemente 30 an der Fahrzeuginnenseite montiert werden. Danach wird der Schiebefalthimmel 1 im zusammengefalteten Zustand zunächst einseitig mit den Schlitten 12 in die Schiene 13 bzw. Führungsnut 37 (Fig. 11) eingesteckt, danach die gegenüberliegenden Schlitten 12 in die Schiene 13 bzw. Nut 37 durch leichtes Überdrücken der elastischen Spriegel 5. Der hintere Schlitten 15 dient, wie schon erwähnt, zur Rahmenbildung 11 und Fixierung des Schiebefalthimmels 1, wobei er aufgrund seiner Ausbildung z. B. in den seitlichen Verkleidungen in einer taschenartigen Aufnahme 49 wie in Fig. 8 eingesteckt, gehalten wird.

## Patentansprüche

1. Dachhimmel für Fahrzeuge mit einem sich in Fahrzeuglängs- und Querrichtung erstreckenden Himmelstoff (2), am Himmelstoff (2) befestigten und diesen am vorderen und hinteren Ende sowie dazwischen mit untereinander gleichmäßigem Abstand abstützenden Spriegeln (5), Führungselementen an den Spriegelenden und sich etwa parallel zu den Längskanten des Fahrzeugdachs erstreckenden, an der Fahrzeugkarosserie (29) befestigten Führungsmitteln zur längsverschiebbaren Aufnahme der Führungselemente, dadurch gekennzeichnet, daß die Führungselemente als jeweils den ersten und zweiten, den dritten und vierten, den fünften und sechsten und, sofern vorhanden, den siebten und achten Spriegel (5) in ihrer beabstandeten Anordnung starr miteinander verbindende Schlitten (12) ausgebildet sind, daß für jeden Schlitten (12) separate Führungsmittel vorgesehen sind, die aus Schienen (13) bestehen, welche in paralleler Ausrichtung übereinander angeordnet sind und daß der Himmelstoff (2) durch die Spriegel (5) in gespannte Felder (11) und ungespannte Felder (6) unterteilt ist, die wahlweise nebeneinander- oder übereinanderliegend anordbar sind, um das Fahrzeugdach weitgehend abzudecken bzw. freizugeben.

2. Dachhimmel nach Anspruch 1, dadurch gekennzeichnet, daß der in Fahrzeuglängsrichtung hinterste Schlitten (15) ortsfest angeordnet ist und daß den verschiebbaren Schlitten (12) jeweils eine ihrem Verschiebeweg entsprechend lange Schiene (13) zugeordnet ist.

3. Dachhimmel nach einem der Ansprüche 1 oder 2, dadurch gekennzeichnet, daß die Spriegel (5) eine der Querwölbung des Fahrzeugdachs angepaßte bogenförmige Ausbildung aufweisen und im Querschnitt unrund, wie oval ausgeführt sind.

4. Dachhimmel nach wenigstens einem der Ansprüche 1 bis 3, dadurch gekennzeichnet, daß die Ränder der ungespannten Felder (6) den jeweils angrenzenden Spriegel (5) von oben her umgreifen.

5. Dachhimmel nach wenigstens einem der Ansprüche 1 bis 4 , dadurch gekennzeichnet, daß die Schienen (13) der Längswölbung des Fahrzeugdachs angepaßt sind.

6. Dachhimmel nach wenigstens einem der Ansprüche 1 bis 5, dadurch gekennzeichnet, daß die Schlaufen (3) am Himmelstoff (2) angenäht oder angeschweißt sind.

7. Dachhimmel nach wenigstens einem der Ansprüche 1 bis 5, dadurch gekennzeichnet, daß die Schlaufen (3) durch Schweiß- oder Nähnähte (10) mit dem Himmelstoff (2) einstückig ausgebildet sind.

8. Dachhimmel nach wenigstens einem der Ansprüche 1 bis 7, dadurch gekennzeichnet, daß die Schlitten (12) mit in den Schienen (13) geführten Gleitflächen (17) und/oder Rollen (19) ausgebildet sind.

9. Dachhimmel nach Anspruch 8, dadurch gekennzeichnet, daß die Schlitten (12) jeweils eine die Gleitflächen (17) und/oder Rollen (19) in Anlage an die Schienen (13) bringbare Verstelleinrichtung aufweisen.

10. Dachhimmel nach Anspruch 9, dadurch gekennzeichnet, daß die Verstelleinrichtung ein Federmittel aufweist.

11. Dachhimmel nach Anspruch 10, dadurch gekennzeichnet, daß die Verstelleinrichtung eine Exzenterscheibe (24) aufweist.

12. Dachhimmel nach wenigstens einem der Ansprüche 1 bis 11, dadurch gekennzeichnet, daß die Schienen (13) an einem an der Fahrzeugkarosserie (29) befestigbaren Verkleidungselement (30) angeordnet sind.

13. Dachhimmel nach wenigstens einem der Ansprüche 1 bis 11, dadurch gekennzeichnet, daß die Schienen (13) einstückig und materialeinheitlich mit einem an der Fahrzeugkarosserie (29) befestigbaren Verkleidungselement (30) ausgebildet sind.

14. Dachhimmel nach Anspruch 12 oder 13, dadurch gekennzeichnet, daß das Verkleidungselement (30) als Kunststoff-Spritzgußteil ausgebildet ist.

15. Dachhimmel nach wenigstens einem der Ansprüche 1 bis 14, dadurch gekennzeichnet, daß am vordersten Spriegel (5) eine Betätigungshandhabe (14) angeordnet ist.

## Claims

1. Roof liner for motor vehicles, having a lining material (2) which extends longitudinally and transversely across the vehicle, with batten-rods (5) attached to the lining material (2) which support it at it front and rear ends and between these at regularly spaced intervals, with guide elements at the ends of the said rods, and guide means ending approximately parallel to the longitudinal edges of the vehicle roof and attached to the body (29) of the vehicle to receive the said guide elements and allow them to be displaced longitudinally,
**characterised in that**
the guide elements are formed as sliders (12) which bold firmly in their spaced arrangement respectively the first and second, the third and fourth the filth and sixth, and when present the seventh and eight batten-rods (5), with separate guide means provided for each slider (12), the said means consist of rails (13) arranged parallel to and over one another, and the lining material (2) is divided by the batten-rods (5) into stretched panels (11) and unstretched panels (6) which can be arranged alongside or over one another, as chosen, so as largely to cover or to expose the roof of the vehicle.

2. Roof liner according to Claim 1,
**characterised in that**
the rearmost slider (15) in the longitudinal direction of the vehicle is in a fixed position and the movable sliders (12) are each associated with a longitudinal rail (13) which guides its sliding movement.

3. Roof lining according to either of Claims 1 or 2,
**characterised in that**
the batten-rods (5) are curved to match the transverse curvature of the vehicle roof, and have non-circular, for example oval cross-sections.

4. Roof lining according to at least one of Claims 1 to 3,
**characterised in that**
the edges of the unstretched panels (6) overlap the respective adjacent batten-rods (5) from above.

5. Roof liner according to at least one of Claims 1 to 4,
**characterised in that**
the guide rails (13) are adapted to the longitudinal curvature of the roof of the vehicle.

6. Roof lining according to at least one of Claims 1 to 5,
**characterised in that**
loops (3) are stitched or welded to the lining material (2).

7. Roof liner according to at least one of Claims 1 to 5,
**characterised in that**
the loops (3) are formed integrally with the lining material (2) by means of welded or stitched seams (10).

8. Roof liner according to at least one of Claims 1 to 7,
**characterised in that**
the sliders (12) are formed with sliding surfaces (17) and/or rollers (19) which are guided within the rails (13).

9. Roof liner according to Claim 8,
**characterised in that**
the sliders (12) each have an adjustment device for bringing the sliding surfaces (17) and/or rollers (19) into contact with the rails (13).

10. Roof liner according to Claim 9,
**characterised in that**
the adjustment device comprises a spring mechanism.

11. Roof liner according to Claim 10,
**characterised in that**
the adjustment device comprises an eccentric disc (24).

12. Roof lining according to at least one of Claims 1 to 11,
**characterised in that**
the rails (13) are arranged on a cladding element (30) which can be attached to the body (29) of the vehicle.

13. Roof lining according to at least one of Claims 1 to 11,
**characterised in that**
the rails (13) are formed integrally with and of the same material as a cladding element (30) which can be attached to the body (29) of the vehicle.

14. Roof lining according to Claims 12 or 13,
**characterised in that**
the cladding element (30) is an injection-moulded plastic component.

15. Roof lining according to at least one of Claims 1 to 14,
**characterised in that**
an actuating handle (14) is arranged on the foremost batten-rod (5).

## Revendications

1. Store de plafond pour véhicules, comprenant une toile de store (2) qui s'étend dans la direction longitudinale et dans la direction transversale du véhicule, des arceaux (5) fixés à la toile de store (2) et qui soutiennent cette dernière à l'extrémité avant et à l'extrémité arrière, ainsi qu'entre les extrémités, à des écartements égaux entre eux, des éléments de guidage prévus aux extrémités des arceaux et des moyens de guidage qui s'étendent à peu près parallèlement aux bords longitudinaux du pavillon du véhicule et sont fixés à la carrosserie (29) du véhicule pour recevoir les éléments de guidage en les guidant en coulissement longitudinal,
caractérisé en ce que les éléments de guidage sont constitués par des coulisseaux (12) qui relient rigidement entre eux, dans leur disposition espacée, les premier et deuxième, les troisième et quatrième, les cinquième et sixième et, s'ils sont présents, les septième et huitième arceaux (5), en ce que, pour chaque coulisseau (12) sont prévus des moyens de guidage séparés qui sont constitués par des rails (13), lesquels sont disposés l'un au-dessus de l'autre dans des alignements parallèles et en ce que la toile de store (2) est divisée par les arceaux (5) en zones tendues (11) et en zones détendues (6) qui peuvent être disposées sélectivement l'une à côté de l'autre ou l'une au-dessus de l'autre, pour masquer ou démasquer le pavillon du véhicule dans une large mesure.

2. Store de plafond selon la revendication 1,
caractérisé en ce que le coulisseau (15) situé à l'extrémité arrière dans la direction longitudinale du véhicule est agencé fixe et en ce qu'à chacun des coulisseaux mobiles (12) est associé un rail (13) dont la longueur correspond à leur trajet de coulissement.

3. Store de plafond selon une des revendications 1 ou 2,
caractérisé en ce que les arceaux (5) présentent une forme en arc, adaptée au bombé transversal du toit du véhicule et sont d'une forme non circulaire, par exemple d'une forme ovale, en section transversale.

4. Store de plafond selon au moins une des revendications 1 à 3,
caractérisé en ce que les bords des zones non tendues (6) entourent chacun l'arceau (5) respectivement adjacent par le dessus.

5. Store de plafond selon au moins une des revendications 1 à 4,
caractérisé en ce que les rails (13) sont adaptés au bombé longitudinal du pavillon du véhicule.

6. Store de plafond selon au moins une des revendications 1 à 5,
caractérisé en ce que les boucles (3) sont cousues ou soudées à la toile de store (2).

7. Store de plafond selon au moins une des revendications 1 à 5,
caractérisé en ce que les boucles (3) sont formées en une seule pièce avec la toile de store (2), par des joints soudés ou cousus (10).

8. Store de plafond selon au moins une des revendications 1 à 7,
caractérisé en ce que les coulisseaux (12) comportent des surfaces glissantes (17) et/ou des galets (19) guidés dans les rails (13).

9. Store de plafond selon la revendication 8,
caractérisé en ce que les coulisseaux (12) présentent chacun un dispositif de réglage qui peut mettre les surfaces de glissement (17) et/ou les galets (19) en appui contre les rails (13).

10. Store de plafond selon la revendication 9,
caractérisé en ce que le dispositif de réglage présente un moyen élastique.

11. Store de plafond selon la revendication 10,
caractérisé en ce que le dispositif de réglage comprend un disque excentrique (24).

12. Store de plafond selon au moins l'une des revendications 1 à 11,
caractérisé en ce que les rails (13) sont disposés sur un élément d'habillage (30) qui peut être fixé à la carrosserie (29) du véhicule.

13. Store de plafond selon au moins une des revendications 1 à 11,
caractérisé en ce que les rails (13) sont réalisés en une seule pièce et venus de matière avec un élément d'habillage (30) qui peut être fixé à la carrosserie (29) du véhicule.

14. Store de plafond selon la revendication 12 ou 13,
caractérisé en ce que l'élément d'habillage (30) est constitué par une pièce en matière plastique moulée par injection.

15. Store de plafond selon au moins une des revendications 1 à 14,
caractérisé en ce qu'une manette d'actionnement (14) est prévue sur l'arceau (5) extrême avant.
